# EUROPÄISCHE PATENTSCHRIFT

(11) **EP 0 980 881 B1**
(45) Veröffentlichungstag und Bekanntmachung des Hinweises auf die Patenterteilung: **17.11.2004**
(21) Anmeldenummer: 99115062.4
(22) Anmeldetag: 04.08.1999
(51) Int. Cl.: C08G 18/63, C08F 283/01, C09D 175/04

(54) **Wässriges Beschichtungsmittel, dessen Herstellung und Verwendung für Einbrennlacke**
Aqueous coating composition, its preparation and use for stoving lacquers
Composition de revêtement aqueuse, sa préparation et utilisation pour vernis au four

(30) Priorität: 17.08.1998 DE 19837062; 17.08.1998 DE 19837063
(43) Veröffentlichungstag der Anmeldung: 23.02.2000
(73) Patentinhaber: Bayer MaterialScience AG, 51368 Leverkusen (DE)
(72) Erfinder: Irle, Christoph, Dr., 47800 Krefeld (DE); Blum, Harald, Dr., 51375 Leverkusen (DE); Petzoldt, Joachim, Dr., 40789 Monheim (DE); Müller, Heino, 51377 Leverkusen (DE)

(56) Entgegenhaltungen:
- EP-A- 0 543 228
- DE-A- 4 237 957
- DE-A- 19 617 086
- GB-A- 1 084 203

## Beschreibung

Die Erfindung betrifft ein wäßriges Überzugsmittel und dessen Herstellung sowie dessen Verwendung, insbesondere zur Erzeugung von chemikalienbeständigen, steinschlagfesten Überzügen.

Für steinschlagfeste Überzüge in der Automobilindustrie wurden bislang meist organisch gelöste Polyesterharze eingesetzt, die mit Melaminharzen oder blockierten Polyisocyanaten als Härter eingebrannt wurden. Ein Verfahren zur Herstellung eines solchen Einbrennfüllers ist z.B. in der DE-A 3 918 510 beschrieben.

Moderne, wäßrige Bindemittel sind in der Lage, in vielen Anwendungen organisch gelöste Bindemittel zu substituieren. Bei manchen Anwendungen derartiger Lacke, wie zum Beispiel in der Automobilindustrie, werden hohe Anforderungen sowohl an die gebrauchsfertigen Beschichtungsmittel als auch an die resultierenden Beschichtungen noch nicht voll erreicht.

So beschreibt z.B. die EP-A 024 727 einen Einbrennlack auf Basis einer Kombination von Epoxidharz-Phosphorsäureester, eines wasserverdünnbaren Polyesters sowie wasserlöslicher Melaminharze. Die DE-A 4 000 748 beschreibt in Ausführungsbeispielen wäßrige Automobilfüller auf Basis wasserverdünnbarer hydroxyfunktioneller Polyester-Polyurethanharze, gegebenenfalls weiterer Bindemittel und wasserlöslicher Aminoharze. Die DE-A 3 813 866 beschreibt Hydrofüller aus wasserverdünnbarem Polyurethanharz, wasserverdünnbarem, epoxidharzmodifiziertem Polyester und gegebenenfalls wasserverdünnbarem Aminoplastharz.

Die hohen Anforderungen, die besonders die Automobilindustrie an Füllerbeschichtungen stellt, werden von diesen Beschichtungen noch nicht vollständig erfüllt. Eine Verbesserung wurde durch weiterentwickelte, Polyisocyanat-vernetzte Füllerbeschichtungen erzielt (M. Bock, H. Casselmann, H. Blum 'Progress in Development of Waterborne PUR-Primers for the Automotive Industry', Proc. Waterborne, Higher Solids and Powder Coatings Symp. New Orleans 1994). Alle genannten Systeme haben jedoch den Nachteil, daß die eingesetzten wasserverdünnbaren Polyester- oder Polyester-Polyurethanharze sehr empfindlich gegen Hydrolyse sind und die Systeme somit eine beschränkte Lagerstabilität aufweisen. Hohen Anforderungen bezüglich Chemikalienbeständigkeit können solche Systeme nicht immer gerecht werden.

Hydrolysefeste wäßrige Dispersionen können z.B. auf der Basis von Copolymerisaten von (Meth)acrylsäureestern hergestellt werden. Neben verbesserter Lagerstabilität weisen Polyacrylate auch eine bessere Chemikalienbeständigkeit auf als Polyester oder Polyester-Polyurethane. Im Bereich steinschlagfester Überzüge werden solche Systeme jedoch nicht eingesetzt, da Polyester- oder Polyester-Polyurethan-basierte Lacke den Polyacrylaten bezüglich mechanischer Eigenschaften, insbesondere bei der Elastiztät deutlich überlegen sind.

In der DE-A 4 332 067 werden Einbrennlacke auf der Basis von in niedermolekularen Oligoestem hergestellten Polyacrylaten beschrieben. Die als Reaktionsmedium für die radikalische Polymerisation eingesetzten Oligoester weisen ein niedriges Molekulargewicht von <1000 g/mol auf. Vorteile, die sich aus einer chemischen Verknüpfung von Polyester und Polyacrylat ergeben, werden nicht beschrieben. Hinweise auf eine für elastische, steinschlagfeste Überzüge geeignete Polyolzusammensetzung werden nicht gegeben.

Die DE-A 4 427 227 beschreibt einen vergilbungsarmen Einbrennlack aus einem Polyacrylat-gepfropften Polyester und wasserverdünnbarem Melaminharz und/oder hydrophiliertem Polyisocyanat besteht. Hinweise auf eine für elastische, steinschlagfeste Überzüge geeignete Polyolzusammensetzung werden auch hier nicht gegeben.

Aufgabe der Erfindung ist die Bereitstellung von lagerstabilen wäßrigen Lacksystemen, die eine verbesserte Chemikalienbeständigkeit bei hervorragender Steinschlagbeständigkeit aufweisen.

Überraschend wurde gefunden, daß diese Aufgabe gelöst werden kann durch Verwendung einer Kombination aus speziellen wäßrigen Polyolen und blockierten Polyisocyanaten. Die erfindungsgemäßen Polyoldispersionen sind dadurch gekennzeichnet, daß sie aus Pfropfcopolymerisaten auf Polyester-Polyacrylatbasis bestehen, wobei als Polyesterkomponente spezielle, langkettige aliphatische Monocarbonsäuren sowie α,β-ungesättigte Carbonsäuren enthaltende Polyester geeignet sind. Die Eignung der erfindungsgemäßen Polyoldispersionen für elastische Einbrennlacke ist insofern überraschend, da Polyole, die einen hohen Anteil Polyacrylat enthalten, bei Einbrennlackierungen, wie sie z.B. für Automobilfüller eingesetzt werden, bislang nicht die hohen Anforderungen an z.B. Elastizität und Steinschlagfestigkeit erfüllen.

Gegenstand der Erfindung ist demgemäß eine wäßrige Dispersion aus
A) einer Polyolkomponente aus
   20 - 60, bevorzugt 40 - 55 Gew.-% einer Polyesterkomponente AI), dadurch gekennzeichnet, daß AI) 10 - 60, bevorzugt 30 - 50 Gew.-% Einheiten enthält, die sich von einer oder mehreren aliphatischen, gesättigten oder ungesättigten Monocarbonsäuren mit 8 - 30 C-Atomen ableiten sowie 0,4 - 5 % Einheiten enthält, die sich von einer oder mehreren, radikalisch polymerisierten, α,β-ungesättigten Mono- oder Dicarbonsäuren mit 3 - 8 C-Atomen bzw. deren Anhydriden ableiten und
   40 - 80, bevorzugt 45 -60 % einer Polyacrylatkomponente AII)
   sowie
B) einer Polyisocyanatkomponente
   bestehend aus einem oder mehreren blockierten, bevorzugt nichthydrophilierten Polyisocyanaten wobei gilt, daß die Komponente B) in Gewichtsanteilen, bezogen auf den Gesamt-Feststoffgehalt der Dispersion, von 1 - 70, bevorzugt 20 - 50 % vorliegt.

Gegenstand der Eindung ist weiterhin ein Verfahren zur Herstellung einer wäßrigen Dispersion, gekennzeichnet dadurch, daß eine
A) Polyolkomponente
   aus 20 - 60, bevorzugt 40 - 55 % einer Polyesterkomponente AI) mit einem Molekulargewicht von 500 - 6000, bevorzugt 1000 - 3000, einer Säurezahl <15 mg KOH/g bevorzugt <12 mg KOH/g und einer OH-Zahl von 50 - 250, bevorzugt 100 - 180 mg KOH/g, dadurch gekennzeichnet, daß AI) hergestellt wird durch Umsetzung von
   - AI ₁₎: 10 - 60 , bevorzugt 30 - 50 % einer oder mehrerer aliphatischer, gesättigter oder ungesättigter Monocarbonsäuren mit 8 - 30 C-Atomen,
   - AI ₂₎: ,4 - 5, bevorzugt 0,6 - 2 % einer α,β-ungesättigten Mono- oder Dicarbonsäure mit 3 - 8 C-Atomen bzw. deren Anhydriden,
   - AI ₃₎: 20 - 60, bevorzugt 25 - 40 % einer oder mehrerer aliphatischer, cycloaliphatischer oder aromatischer Di-, Tri- oder Tetracarbonsäuren mit 2 bis 20 C-Atomen bzw. deren Anhydriden,
   - AI ₄₎: 10 - 60, bevorzugt 20 - 50 % eines oder mehrerer aliphatischer Alkohole mit 1 - 4 OH-Gruppen pro Molekül,
   - AI ₅₎: 0 - 10 % einer aromatischen Monocarbonsäure,
   - AI ₆₎: 0 - 10 % weiteren COOH- oder OH-reaktiven Verbindungen wie Epoxiden, Isocyanaten, Aminen oder Oxazolinen mit 1 - 4, bevorzugt 1,9 - 2,5 funktionellen Gruppen pro Molekül
   und
   40 - 80, bevorzugt 45 - 65 % einer Polyacrylatkomponente AII) hergestellt werden durch radikalische Polymerisation einer Mischung aus
   - AII ₁₎: 20 - 70, bevorzugt 25 - 50 % eines oder mehrerer nicht-funktioneller Ester von α,β-ungesättigten Carbonsäuren mit 3 - 12 C-Atomen und aliphatischen oder cycloaliphatischen Monoalkoholen mit 1 - 18 C-Atomen
   - AII ₂₎: 1 - 10, bevorzugt 2 - 7 % einer oder mehrerer α,β-ungesättigter Carbonsäuren mit 3 - 12 C-Atomen bzw. deren Anhydriden
   - AII ₃₎: 0 - 95 % eines oder mehrerer hydroxyfunktioneller, radikalisch polymerisierbarer Monomere
   - AII ₄₎: 0 - 20 % weiterer radikalisch polymerisierbarer Monomere
   in Gegenwart der Polyesterkomponente AI), wobei gilt, daß die unter AI) und AII) gemachten Angaben auf das Gewicht bezogen sind und sich zu 100 % addieren
   und anschließend
B) eine Polyisocyanatkomponente
   bestehend aus einem blockierten, bevorzugt nichthydrophilierten Polyisocyanat
   sowie Wasser, gegebenenfalls organische Lösemittel und gegebenenfalls lackübliche Hilfsstoffe zugegeben werden, wobei gilt, daß die Komponente B) in Gewichtsanteilen, bezogen auf den Gesamt-Feststoffgehalt der Dispersion, von 1 - 70, bevorzugt 20 - 50 % vorliegt.

Ein weiterer Gegenstand der Erfindung ist die Verwendung der so hergestellten Lacke für Einbrennbeschichtungen, bevorzugt in der Automobilerstlackierung, besonders bevorzugt als Einbrennfüller.

Zur Herstellung der erfindungsgemäßen Polyolkomponente A) wird so vorgegangen, daß zunächst die Polyesterkomponente AI) nach üblichen Verfahren synthetisiert wird. Die Herstellung von Polyestern AI) ist bekannt.

Als Bestandteil AI ₁₎ enthält die Polyesterkomponente der erfindungsgemäßen Polyoldispersion eine oder mehrere aliphatische Monocarbonsäuren mit 8 - 30 C-Atomen. Beispiele für gesättigte Monocarbonsäuren mit 8 - 30 C-Atomen sind 2-Ethylhexansäure, Octansäure (Caprylsäure), Decansäure (Caprinsäure), Dodecansäure (Laurinsäure), Hexadecansäure (Cetylsäure) oder Octadecansäure (Stearinsäure). Weiterhin geeignet sind aliphatische, einfach oder mehrfach ungesättigte Monocarbonsäuren mit 8 - 30 C-Atomen wie z.B. Ölsäure, Linolsäure oder Linolensäure. Bevorzugt eingesetzt werden Gemische aus Monocarbonsäuren, wie sie bei der Verseifung natürlicher Öle und Fette entstehen. Beispiele für solche Fettsäuren sind Sojaölfettsäure, Tallölfettsäure, Leinölfettsäure, Rizinusölfettsäure, Kokosnußölfettsäure, Erdnußölfettsäure oder Safflorölfettsäure. Weiterhin geeignete Beispiele für Monocarbonsäuren mit 8 - 30 C-Atomen sind hydrierte Fettsäuren, synthetische Fettsäuren z.B. aus der Parrafinoxidation oder der Koch-Synthese (J. Falbe, New Syntheses with Carbon Monoxide, Berlin, Heidelberg, New York (1980)). Bevorzugt werden aliphatische Carbonsäuren mit weniger als 2 C=C-Doppelbindungen eingesetzt.

Weitere Bausteine der erfindungsgemäßen Polyester sind α,β-ungesättigte Monooder Dicarbonsäuren mit 3 - 8 C-Atomen AI ₂₎. Beispiele für solche Carbonsäuren sind Acrylsäure, Methacrylsäure, Itaconsäure, Maleinsäure, Fumarsäure oder Tetrahydrophthalsäure. Statt der freien Carbonsäuren können auch Derivate von Carbonsäuren wie z.B. Anhydride oder Ester als Ausgangssubstanz für die Polyesterherstellung eingesetzt werden.

Beispiele für aliphatische, cycloaliphatische oder aromatische Di-, Tri-oder Tetracarbonsäuren mit 2 - 40 C-Atomen AI ₃₎ sind Phthalsäure, Isophthalsäure oder Terephthalsäure sowie Pyromellithsäure, Trimellithsäure und Bernsteinsäure, Adipinsäure, Sebacinsäure, Azelainsäure. Ebenfalls geeignet sind aus natürlichen oder synthetischen Fettsäuren hergestellte Dimerfettsäuren. Statt der freien Carbonsäuren können auch Derivate von Carbonsäuren wie z.B. Anhydride oder Ester als Ausgangssubstanz für die Polyesterherstellung eingesetzt werden.

Als OH-Komponenten AI ₄₎ mit 1 - 4 OH-Gruppen pro Molekül können z.B. aliphatische Monoalkohole wie Butanol, Pentanol oder 2-Ethylhexanol eingesetzt werden. Ebenfalls geeignet sind 'Fettalkohole', wie sie bei der Reduktion von Fettsäuren gebildet werden. Beispiele für Alkoholkomponenten mit 2 OH-Gruppen sind Ethylenglykol, Neopentylglykol, 1,4-Butandiol, 1,6-Hexandiol, Trimethylpentandiol, 1,4-Cyclohexandimethanol, Diethylenglykol, Triethylenglykol, Tripropylenglykol oder hydriertes Bisphenol. Bevorzugt werden als OH-Komponenten AI ₄₎ drei- und höherwertige Alkoholkomponenten, gegebenenfalls in Kombination mit zweiwertigen Alkoholen eingesetzt. Beispielhaft seien genannt Pentaerythrit, Glycerin oder Trimethylolpropan.

Als Monocarbonsäuren AI ₅₎ sind z. B geeignet Benzoesäure oder Alkylbenzoesäuren.

Üblicherweise erfolgt die Herstellung der Polyesterkomponente AI) durch Polykondensation wie in der Literatur (R. Dhein, K. Reuter, G. Ruf in 'Houben-Weyl, Methoden der Organischen Chemie Bd E20/ 2', Hrsg.: H. Bartl, J. Falbe, 4. Auflage S. 1429 - 1435, Stuttgart, New York (1987)) beschrieben.

Es ist jedoch auch möglich, zusätzlich mit weiteren Verbindungen AI ₆₎, z.B. OH-reaktiven Verbindungen wie Polyisocyanaten oder COOH-reaktiven Verbindungen wie Epoxid-, Amino- oder Oxazolingruppen enthaltenden Substanzen umzusetzen und so Urethan- oder Amidgruppen in den Polyester einzubauen. Als Polyisocyanate sind bevorzugt aliphatische Polyisocyanate wie Hexamethylendiisocyanat, Isophorondiisocyanat, Methylen-bis-(4-isocyanatocyclohexan), Tetramethylxylylendiisocyanat oder modifizierte aliphatische Typen wie Isocyanurat-, Uretdion- oder Biuretgruppen enthaltende Polyisocyanate geeignet. Prinzipiell geeignet sind daneben aromatische Polyisocyanate wie Toluylendiisocyanat oder Methylen-bis-(4-isocyanatobenzol). Geeignete Epoxide sind z.B. Epoxidharze auf Basis von Bisphenol-A-diglycyidylether oder auch Cardura ® E 10 (Shell). Geeignete Amine sind z.B. Hexamethylendiamin, Isophorondiamin, Diethylentriamin, Ethylendiamin.

Die Polyacrylatkomponente AII) wird nach dem erfindungsgemäßen Verfahren durch eine radikalische Polymerisation in Gegenwart der Polyesterkomponente AI) hergestellt. Wegen der Reaktion der Komponenten AII₁₎ - AII₄₎ mit den α,β-ungesättigten Polyesterkomponenten findet hier eine Pfropfcopolymerisation statt. Das dabei gebildete Pfropfcopolymer weist eine höhere Molmasse und vor allem eine bessere Verträglichkeit auf als eine Mischung aus Polyester und Polyacrylat. Neben der Komponente AI) können auch organische Lösemittel während der Polymerisation zugegen sein. Als organische Lösemittel werden die für die Herstellung von Polyacrylatharzen üblichen und für die Herstellung von wäßrigen Dispersionen geeigneten Lösemittel eingesetzt. Als Beispiel für geeignete Lösemittel seien genannt: Alkylbenzole wie Toluol, Xylol oder Ethylbenzol, Alkohole wie *n*-Butanol, *iso*-Propanol, Ethylenglykol-monobutylether, Diethylenglykol-monobutylether, Tripropylenglykol, 3-Methyl-3-methoxybutanol oder auch 1-Methoxypropylacetat-2, Dipropylenglykol-dimethylether. Weiterhin geeignet sind Aceton, Butanon, Ethanol, Propanol oder Hexan. Die verwendeten Lösemittel können vor, während oder nach dem Dispergierschritt ganz oder teilweise, gegebenenfalls azeotrop und/oder durch Anlegen eines Vakuums bzw. eines verstärkten Inertgasstromes aus dem Reaktionsgemisch entfernt werden.

Bei der radikalischen Polymerisation kann z.B. so vorgegangen werden: Die Komponenten AII ₁₎ bis AII ₄₎ werden getrennt oder zusammen oder auch teilweise vermischt bei einer geeigneten Temperatur zu der Kommponente AI) und gegebenenfalls einem Lösemittel zudosiert und dort in Gegenwart eines Polymerisationsinitiators polymerisiert. Als Polymerisationsinitiator werden an sich bekannte Verbindungen eingesetzt. Beispielsweise geeignet sind Peroxide wie Dibenzoylperoxid, Di-*t*-butylperoxid oder *t*-Butylper 2-ethylhexanoat oder auch Azoinitiatoren wie Azo-bis-isobutyronitril oder Azo-bis-isovaleronitril. Ebenso ist es möglich, die Polymerisation in Gegenwart von Reglern durchzuführen. Solche Verbindungen, die durch Radikalübertragung das Molgewicht der Polymerisate verringern, sind ebenfalls bekannt. Als Beispiele seien genannt *n*-Dodecylmercaptan oder Mercaptoessigsäure.

Zur Erzielung besonderer Eigenschaften können ein oder mehrere Monomere schneller, langsamer, früher beginnend und/oder später endend als die anderen Monomere zudosiert werden.

Als Komponente AII ₁₎ kann jeder copolymerisierbare (Cyclo)alkylester der (Meth)-acrylsäure mit 1 bis 20 Kohlenstoffatomen im Cycloalkylrest oder ein Gemisch aus solchen (Meth)acrylsäureestern eingesetzt werden. In Betracht kommen besonders Alkylacrylate oder -methacrylate mit 1 - 18 Kohlenstoffatomen im Alkylrest. Als Beispiele seine genannt: Methyl-, Ethyl-, *n*-Propyl-, *n*-Butyl-, *i*-Butyl-, *n*-Hexyl-, 2-Ethylhexyl-, *n*-Stearyl- und *n*-Laurylacrylat und -methacrylat sowie auch cycloaliphatische (Meth)acrylsäureester wie Cyclohexyl(meth)acrylat oder Norbornyl (meth)acrylat. Ebenso geeignet sind Ester der Malein- oder Fumarsäure wie z.B. Maleinsäure- oder Fumarsäuredimethyl- oder diethylester.

Beispiele für geeignete α,β-ungesättigte Carbonsäuren AII ₂₎ sind z.B. Acrylsäure, Methacrylsäure, Itaconsäure, Maleinsäure, Fumarsäure oder Tetrahydrophthalsäure. Statt der freien Carbonsäuren können auch deren Anhydride als Ausgangssubstanz eingesetzt werden.

Geeignete hydroxyfunktionelle Monomere AII ₃₎ sind bevorzugt alle Hydroxyalkyloder Hydroxycycloalkylester der unter AII ₂₎ genannten Säuren. Diese hydroxyfunktionellen Ester werden besonders bevorzugt durch Umsetzung der (Meth)acrylsäure mit einem Alkylenoxid oder einem aliphatischen Diol erhalten. Beispielsweise geeignet sind 2-Hydroxyethyl(meth)acrylat, 2-Hydroxypropyl(meth)acrylat, 3-Hydroxypropyl(meth)acrylat, 4-Hydroxybutyl(meth)acrylat oder auch die Umsetzungsprodukte der (Meth)acrylsäure mit Monoepoxiden wie z.B. Cardura ® E10 (Shell). Weiterhin geeignet sind die Ester von (Meth)acrylsäure und oligo- oder polymerer Ethylen- oder Propylenglykole. Ebenfalls geeignet, jedoch weniger bevorzugt sind OH-Gruppen enthaltende, radikalisch polymerisierbare Monomere, die keine von α,β-ungesättigten Carbonsäuren abgeleiteten Strukturen enthalten.

Beispiele für weitere radikalisch polymerisierbare Monomere AII ₄₎ sind z.B. vinylaromatische Verbindungen wie Styrol oder α-Methylstyrol, Vinylester von Carbonsäuren mit 1 - 20 C-Atomen wie Versaticsäure, Propionsäure oder Essigsäure, Vinylether, Vinylpyrrolidon oder Verbindungen mit zwei oder mehr radikalisch polymerisierbaren Doppelbindungen wie z.B. Butandioldi(meth)acrylat, Hexandioldi(meth)acrylat oder Divinylbenzol oder Polybutadiene.

Zur Herstellung einer erfindungsgemäßen Polyoldispersion werden anschließend die Säuregruppen des Polyester-Polyacrylat-Pfropfcopolymers in die Salzform überführt. Dies geschieht bevorzugt durch Reaktion mit einem Amin. Besonders bevorzugt sind tertiäre Amine wie Triethylamin, N,N-Dimethylethanolamin oder N,N-Dimethylisopropanolamin. Ebenso möglich ist die Neutralisation mit z.B. Metallhydroxiden wie Kalium-, Natium- oder Lithiumhydroxid bzw. mit primären oder sekundären Aminen und Ammoniak.

Zur Überführung des hydrophilierten Harzes in wäßrige Dispersion wird anschließend unter heftigem Rühren Wasser zum Harz gegeben. Man kann jedoch ebenfalls so verfahren, daß Wasser vorgelegt und das hydrophilierte Harz unter Rühren zudosiert wird. Ein weniger bevorzugtes Verfahren besteht darin, das Neutralisationsmittel im Dispergierwasser zu lösen und unter Rühren das nichthydrophilierte Harz zuzufügen bzw. das nichthydrophilierte Harz vorzulegen und unter Rühren die Lösung des Neutralisationsamins in Wasser zuzufügen.

Die so hergestellte Polyoldispersion kann anschließend zusammen mit Vernetzerkomponenten zu einem Einbrennlack formuliert werden. Als Vernetzerkomponente werden bevorzugt blockierte Polyisocyanate eingesetzt. Zur Einarbeitung des blockierten Polyisocyanats in den wäßrigen Lack kann so vorgegangen werden, daß ein hydrophiliertes, blockiertes Polyisocyanat der Polyoldispersion zugemischt wird. Ein besonders bevorzugtes Verfahren besteht darin, ein oder mehrere nichthydrophilierte, blockierte Polyisocyanate dem Polyester-Polyacrylatharz vor Neutralisation zuzumischen und dieses Harzgemisch gemeinsam zu dispergieren.

Beispiele für den blockierten Polyisocyanaten zugrunde liegende einsetzbare Polyisocyanate sind cycloaliphatische, aliphatische oder aromatische Polyisocyanate wie Tetramethylen-diisocyanat, Cyclohexan-1,3- und 1,4-diisocyanat, Hexamethylendiisocyanat (HDI), 1-Isocyanato-3,3,5-trimethyl-5-isocyanatomethylcyclohexan (Isophorondiisocyanat, IPDI), Methylen-bis-(4-isocyanatocyclohexan), Tetramethylxylylendiisocyanat (TMXDI). Prinzipiell geeignet sind daneben aromatische Polyisocyanate wie Toluylendiisocyanat (TDI), Diphenylmethan-2,4'- und/ oder 4,4'-diisocyanat (MDI), Triphenylmethan- 4,4'-diisocyanat, Naphthylen-1,5-diisocyanat. Bevorzugt geeignet sind Polyisocyanate, die Heteroatome in dem die Isocyanatgruppen enthaltenden Rest enthalten. Beispiele hierfür sind Carbodiimidgruppen, Allophanatgruppen, Isocyanuratgruppen, Urethangruppen und Biuretgruppen aufweisende Polyisocyanate. Besonders gut für die Erfindung geeignet sind die bekannten Polyisocyanate, die hauptsächlich bei der Herstellung von Lacken eingesetzt werden, z.B. Biuret-, Isocyanurat- oder Uretdiongruppen aufweisende Modifizierungsprodukte der obengenannten einfachen Polyisocyanate, insbesondere des Hexamethylendiisocyanats oder des Isophorondiisocyanats. Weiterhin geeignet sind niedermolekulare, Urethangruppen enthaltende Polyisocyanate, wie sie durch Umsetzung von im Überschuß eingesetztem IPDI oder TDI mit einfachen mehrwertigen Alkoholen des Molekulargewichtsbereiches 62 - 300, insbesondere mit Trimethylolpropan oder Glycerin, erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanaten reaktionsfähigen funktionellen Gruppen zugänglich sind. In diesen bekannten Prepolymeren entspricht das Verhältnis von Isocyanatgruppen zu gegenüber NCO reaktiven Wasserstoffatomen 1,05 : 1 bis 10 : 1, vorzugsweise 1,1 : 1 bis 3 : 1, wobei die Wasserstoffatome vorzugsweise aus Hydroxylgruppen stammen. Die Art und Mengenverhältnisse der bei der Herstellung von NCO-Prepolymeren eingesetzten Ausgangsmaterialien werden im übrigen vorzugsweise so gewählt, daß die NCO-Prepolymeren vorzugsweise eine mittlere NCO-Funktionalität von 2 bis 3 und ein Zahlenmittel der Molmasse von 500 - 10000, vorzugsweise 800 - 4000 aufweisen.

Die Isocyanatgruppen der Polyisocyanate sind vollständig blockiert. Als Blockierungsmittel können übliche Verbindungen eingesetzt werden, wie sie beispielsweise auf dem Lacksektor eingesetzt werden. Beipiele für geeignete Blockierungsmittel sind Malonsäuredimethylester, Malonsäurediethylester, Acetessigsäureethylester, s-Caprolactam, Acetanilid, sekundäre aliphatische Amine und/ oder Acetonoxim. Bevorzugt eingesetzt werden Butanonoxim, 3,5-Dimethylpyrrazol oder Triazol.

Die Blockierung der Polyisocyanate kann z.B. durch Erwärmen ein oder mehrerer Polyisocyanate mit dem Blockierungsmittel erfolgen. Beispielsweise können ein oder mehrere Polyisocyanate vorgelegt und unter Rühren erhitzt werden, z.B. auf etwa 80°C, und das Blockierungsmittel (bespielsweise während etwa 10 min.) zudosiert werden. Es wird so lange gerührt, bis kein freies Isocyanat mehr nachweisbar ist. Es ist auch möglich, ein oder mehrere Polyisocyanate mit einem Gemisch aus zwei oder mehreren Blockierungsmitteln zu blockieren.

Bevorzugt werden die beschriebenen blockierten Polyisocyanate nicht hydrophil eingestellt und die Überführung in die wäßrige Dispersion wird durch Vermischen und gemeinsames Dispergieren mit der Polyolharzschmelze bewerkstelligt. Es ist jedoch auch möglich, das Polyol allein zu dispergieren und der wäßrigen Phase eine Lösung oder Dispersion eines hydrophilierten blockierten Polyisocyanats zuzufügen. Hydrophilierte blockierte Polyisocyanate sind bekannt (z.B. EP-A 566 953).

Einbrennlacke aus den erfindungsgemäßen Polyolen und blockierten Isocyanaten können mit weiteren Bindemitteln kombiniert werden. Bevorzugt ist die Kombination mit wasserlöslichen oder wasserunlöslichen Melaminharzen sowie wasseremulgierbaren oder wasserdispergierbaren Polyesterharzen oder Polyester-Polyurethanharzen.

Zur Herstellung der Einbrennlacke können übliche Additive (z.B. Pigmente, Füllstoffe, Hilfs- und Zusatzstoffe) zugesetzt werden, wie sie auf dem Lacksektor üblich sind. Die Mengen liegen im üblichen, dem Fachmann geläufigen Bereich.

Die erfindungsgemäße Verwendung ist die Herstellung von Einbrennlacken, bevorzugt in der Automobilerstlackierung, besonders bevorzugt für die Herstellung steinschlagfester Füllerschichten. Hierzu können die erfindungsgemäßen Überzugsmittel durch Rakeln, Tauchen, Spritzauftag wie Druckluft- oder Airless-Spritzen, sowie durch elektrostatischen Auftrag, beispielsweise Hochrotationsglockenauftrag, aufgetragen werden. Die Trockenfilm-Schichtdicke kann beispielsweise bei 10 - 80 µm liegen. Die Trocknungsbedingungen der erfindungsgemäßen Einbrennlacke hängen von der Natur des gewählten Blockierungsmittels der Komponente B) ab. Im allgemeinen liegen die Temperaturen bei 80 - 200°C. Bevorzugt ist eine Temperaturkonstanz während 10 - 30 Minuten. Der bevorzugte Einbrennbereich liegt bei etwa 135 - 170°C während etwa 20 Minuten.

Die aus den erfindungsgemäßen Dispersionen hergestellten Lacke haben eine sehr hohe Lagerstabilität. Der bei wäßrigen Polyester-Dispersionen oder -Lösungen bzw. Polyester-Polyurethan-Dispersionen üblicherweise bei Lagerung stattfindende chemische Abbau durch Spaltung von Esterbindungen wird bei den erfindungsgemäßen Polyester-Polyacrylat-Dispersionen nicht beobachtet. Gleichzeitig weisen die aus den erfindungsgemäßen Disperionen bereiteten Lacke eine hervorragende Steinschlagbeständigkeit auf, die bei wäßrigen Lacken bislang nur von Systemen auf Basis von Polyester-Dispersionen eingestellt werden konnte.

### Beispiele

### Beispiel 1 - Polyesterharz

In ein 15 1 Reaktionsgefäß mit Rühr-, Kühl- und Heizvorrichtung sowie Wasserabscheider werden 4041 g Erdnußölfettsäure, 4350 g Trimethylolpropan, 1131 g Triethylenglykol, 99 g Maleinsäureanhydrid, 2035 g Phthalsäureanhydrid und 2008 g Adipinsäure eingewogen. Durch das Reaktionsgemisch wird Stickstoff geleitet. Der Ansatz wird in 4 h auf 185°C aufgeheizt. Nach 2 h bei 185°C wird dann innerhalb weiterer 2 h auf 220°C aufgeheizt. Bei dieser Temperatur wird ein starker Stickstoffstrom (ca. 30 l/h) durch den Ansatz geleitet bis die Säurezahl auf 9 mg KOH/g gefallen ist. Die OH-Zahl beträgt 196 mg KOH/g.

### Beispiel 2 - Polyester-Polyacrylatharz

In einem 6l-Vierhalskolben mit Innenthermometer, Rührvorrichtung, Tropftrichter, Gaseinleitung und Rückflußkühler werden in einer Stickstoffatmosphäre 500 g der Polyestervorstufe aus Beispiel 1 und 33,4 g Butyldiglykol (Diethylenglykol-monobutylether) vorgelegt. Im Tropftrichter wird eine Monomermischung aus 75 g Hydroxyethylmethacrylat, 56 g Butylacrylat, 271 g Methylmethacrylat und 50 g Styrol zubereitet. Bei einer Temperatur von 145°C wird innerhalb von 3 h die Hälfte der Monomermischung zudosiert. Parallel dazu wird eine Lösung von 10 g Di-t-butylperoxid in 40 g Butyldiglykol zudosiert. Anschließend wird zum Rest der Monomermischung 48 g Acrylsäure zugegeben und vermischt. Die so hergestellte zweite Monomermischung wird nun innerhalb von 1,5 h zudosiert. Parallel dazu wird eine Lösung von 5 g Di-t-butylperoxid in 20 g Butyldiglykol zudosiert. Anschließend wird zum Nachaktivieren noch eine Lösung von 5 g Di-t-butylperoxid in 20 g Butyldiglykol zudosiert.

### Beispiel 3 - Blockiertes Polyisocyanat

In einem 2 1 - Vierhalskolben mit Rückflußkühler, Innenthermometer und Rührer werden 600 g Desmodur ® L67 (aromatisches Polyisocyanat auf Basis Toluylendiisocyanat, 67 %-ig in 1-Methoxypropylacetat-2/Xylol (1:1) gelöst, Isocyanatgehalt 11,5 %) auf 65°C aufgeheizt. Anschließend werden 143 g Butanonoxim innerhalb einer Stunde zugetropft. Es wird so lange gerührt, bis im Infrarotspektrum keine Isocyanatbande mehr zu erkennen ist.

### Beispiel 4 - Selbstvernetzende Polyester-Polyacrylat-Dispersion

In einem 61-Vierhalskolben mit Innenthermometer, Rührvorrichtung, Gaseinleitung und Rückflußkühler werden in einer Stickstoffatmosphäre 1108 g der Polyester-Polyacrylatvorstufe aus Beispiel 2 und 669 g des blockierten Isocyanats aus Beispiel 3 bei 70°C homogenisiert. Es werden 64 g N,N-Dimethylethanolamin zugegeben und 30 Minuten gerührt. Anschließend werden 1315 g Wasser zugegeben. Das Produkt ist eine milchige wäßrige Dispersion mit einer mittleren Teilchengröße von 295 nm (bestimmt durch Laserkorrelationsspektroskopie), einer Viskosität von 1500 mPa·s und einem nichtflüchtigen Anteil von 40,0 %.

### Beispiel 5 - Selbstvernetzende Polyester-Polyacrylat-Dispersion

In einem 41-Vierhalskolben mit Innenthermometer, Rührvorrichtung, Gaseinleitung und Rückflußkühler werden in einer Stickstoffatmosphäre 600 g der Polyester-Polyacrylatvorstufe aus Beispiel 2 und 613 g Desmodur ® BL 3175 (vernetzendes Einbrennurethanharz auf Basis Hexamethylendiisocyanat, 75 %-ig in Solventnaphtha 100 gelöst) bei 70°C homogenisiert. Es werden 61 g N,N-Dimethylethanolamin zugegeben und 30 Minuten gerührt. Anschließend werden 1153 g Wasser zugegeben. Das Produkt ist eine milchige wäßrige Dispersion mit einer mittleren Teilchengröße von 213 nm (bestimmt durch Laserkorrelationsspektroskopie), einer Viskosität von 3574 mPa·s und einem nichtflüchtigen Anteil von 43,2 %.

### Beispiel 6 - Einbrennlack aus der selbstvernetzenden Polyester-Polyacrylat-Dispersion aus Beispiel 4

45,18 g einer Anreibepaste, die 30 Minuten in einer handelsüblichen Perlmühle vermahlen wird, bestehend aus 12,56 g 42 %-iger Polyester-Polyurethan-Dispersion, 9,6 g dest. Wasser, 1 g Butyldiglykol, 0,15 g Entschäumer (Bayer, Entschäumer DNE), 0,43 g handelsüblichem Benetzungsmittel, 14,72 g Titandioxid (Bayertitan R-KB-4), 0,14 g Eisenoxidschwarz (Bayferrox 303 T), 4,05 g Bariumsulfat (Blanc fixe Micro, Sachtleben GmbH), 2,7 g Talkum (Micro Talc IT Extra, Norwegian Talc) und 0,41 g Antiabsetzmittel (Aerosil R 972, Degussa) werden mit 49,1 g der 40%igen Polyester-Polyacrylat-Dispersion aus Beispiel 4 und 5,2 g eines handelsüblichen wäßrigen blockierten Polyisocyanates (Bayhydur BL 5140) sowie 0,6 g marktüblicher Untergrundbenetzungsmittel verrührt und mit dest. Wasser auf eine Spritzviskosität von ca. 22 s Ford DIN-Becher 4 mm verdünnt. Dieser Lack wird mittels Fließbecher-Spritzpistole mit einer Düse Durchmesser/1,5 mm und einem Zerstäuberdruck von 5 bar auf die nachstehenden Substrate in einer resultierenden Trockenfilmstärke von 25-35 µm aufgetragen.

### Beispiel 7 - Einbrennlack aus der selbstvernetzenden Polyester-Polyacrylat-Dispersion aus Beispiel 5

45,18 g einer Anreibepaste, die 30 Minuten in einer handelsüblichen Perlmühle vermahlen wird, bestehend aus 12,56 g 42%-iger Polyester-Polyurethan-Dispersion, 9,6 g dest. Wasser, 1 g Butyldiglykol, 0,15 g Entschäumer (Bayer, Entschäumer DNE), 0,43 g handelsüblichem Benetzungsmittel, 14,72 g Titandioxid (Bayertitan R-KB-4), 0,14 g Eisenoxidschwarz (Bayferrox 303 T), 4,05 g Bariumsulfat (Blanc fixe Micro, Sachtleben GmbH), 2,7 g Talkum (Micro Tale IT Extra, Norwegian Talc) und 0,41 g Antiabsetzmittel (Aerosil R 972, Degussa) werden mit 45,65 g der 43%igen Polyester-Polyacrylat-Dispersion aus Beispiel 5 und 5,2 g eines handelsüblichen wäßrigen blockierten Polyisocyanates (Bayhydur BL 5140) sowie 0,6 g marktüblicher Untergrundbenetzungsmittel verrührt und mit dest. Wasser auf eine Spritzviskosität von ca. 20-22 s Ford DIN-Becher 4 mm verdünnt. Dieser Lack wird mittels Fließbecher-Spritzpistole mit einer Düse Durchmesser/1,5 mm und einem Zerstäuberdruck von 5 Bar auf die nachstehenden Substrate in einer resultierenden Trockenfilmstärke von 25-35 µm aufgetragen.

Die Naßlackfilme der Beispiel 6 und 7 werden 5 Minuten bei 23°C abgelüftet und anschließend in einem Umluftofen eingebrannt. Die Substrate sind im Fall der Prüfungen von Pendelhärte und Glanz Glasplatten, im Fall der Steinschlagprüfungen KTL-beschichtete Stahlbleche, wie sie in der Automobil-Produktion verwendet werden.

### Prüfergebnisse:

Die folgenden Prüfergebnisse wurden nach Vernetzung bei 140°C (erster Wert) bzw. 160°C (zweiter Wert) erhalten; Einbrenndauer jeweils 30 Minuten.

| **Beispiel** | **Pendelhärte s** | **Glanz 60° %** | **Steinschlagtest VDA** | **BMW-Keil (RT)** |
|---|---|---|---|---|
| **6** | 126/ 131 | 87/ 87 | 1/ 1 | i. O./ i. O. |
| **7** | 63/102 | 90/86 | 1/ 1 | i.O. /0,3 mm |
| Pendelhärte: Schwingungsversuch nach König DIN 53 157 | | | | |
| Glanzmessung nach Gardner 60° | | | | |
| Steinschlagtest VDA in Anlehnung an VW-Spezifikation mit 2mal 500 g Stahlschrot bei 1,5 Bar Luftdruck beschossen. Index 1 - 10 (1 = keine Durchschüsse, 10 = sehr große und viele Abplatzungen vom Blech) | | | | |
| Steinschlagtest in Anlehnung an BMW-Spezifikation mit Einzelschlagprüfgerät ESP 10 von Byk bei 3 bar Prüfdruck. Bestimmung der Trennebene in mm vom Stahlblech. | | | | |

## Patentansprüche

1. Wäßrige Dispersion aus
A) einer Polyolkomponente A) bestehend aus
20 - 60 Gew.-% einer Polyesterkomponente AI), **dadurch gekennzeichnet, daß** AI) 10 - 60 Gew.-% Einheiten enthält, die sich von einer oder mehreren aliphatischen, gesättigten oder ungesättigten Monocarbonsäuren mit 8 - 30 C-Atomen ableiten sowie 0,4 - 5 % Einheiten enthält, die sich von einer oder mehreren, radikalisch polymerisierten, α,β-ungesättigten Mono- oder Dicarbonsäuren mit 3 - 8 C-Atomen bzw. deren Anhydriden ableiten und
40 - 80 % einer Polyacrylatkomponente AII)
sowie
B) einer Polyisocyanatkomponente
bestehend aus einem oder mehreren blockierten Polyisocyanaten wobei gilt, daß die Komponente B) in Gewichtsanteilen, bezogen auf den Gesamt-Feststoffgehalt der Dispersion, von 1 - 70 % vorliegt.

2. Wäßrige Dispersion nach Anspruch 1 aus
A) einer Polyolkomponente
aus 20 - 60 % einer Polyesterkomponente AI) mit einem Molekulargewicht von 500 - 6000, einer Säurezahl < 12 mg KOH/g und einer OH-Zahl von 50 - 250 mg KOH/g, **dadurch gekennzeichnet, daß** AI) erhältlich ist durch Umsetzung von
AI ₁₎ 10 - 60 % einer oder mehrerer aliphatischer, gesättigter oder ungesättigter Monocarbonsäuren mit 8 - 30 C-Atomen,
AI ₂₎ 0,4 - 5 % einer α,β-ungesättigten Mono- oder Dicarbonsäure mit 3 - 8 C-Atomen bzw. deren Anhydriden,
AI ₃₎ 20 - 60 % einer oder mehrerer aliphatischer, cycloaliphatischer oder aromatischer Di-, Tri-oder Tetracarbonsäuren mit 2 - 20 C-Atomen bzw. deren Anhydriden,
AI ₄₎ 10 - 60 % eines oder mehrerer aliphatischer Alkohole mit 1 - 4 OH-Gruppen pro Molekül,
AI ₅₎ 0 - 10 % einer aromatischen Monocarbonsäure,
AI ₆₎ 0 - 10 % weiteren Säure- oder OH-reaktiven Verbindungen wie z.B. Epoxiden, Isocyanaten oder Oxazolinen mit 1 - 4, bevorzugt 1,9 bis 2,5 funktionellen Gruppen pro Molekül,
sowie 40 - 80 % einer Polyacrylatkomponente AII) erhältlich durch radikalische Polymerisation einer Mischung aus
AII ₁₎ 20 - 70 % eines oder mehrerer nicht-funktioneller Ester von α,β-ungesättigten Carbonsäuren mit 3 - 12 C-Atomen und aliphatischen oder cycloaliphatischen Monoalkoholen mit 1 - 18 C-Atomen,
AII ₂₎ 1 - 10 % einer oder mehrerer α,β-ungesättigter Carbonsäuren mit 3 - 12 C-Atomen bzw. deren Anhydriden,
AII ₃₎ 0 - 95 % eines oder mehrerer hydroxyfunktioneller, radikalisch polymerisierbarer Monomere,
AII ₄₎ 0 - 20 % weiterer radikalisch polymerisierbarer Monomere,
in Gegenwart der Polyesterkomponente AI) wobei gilt, daß die unter AI und AII gemachten Angaben auf das Gewicht bezogen sind und sich zu 100 % addieren,
sowie
B) einer Polyisocyanatkomponente
bestehend aus einem blockierten, bevorzugt nichthydrophilierten Polyisocyanat wobei gilt, daß die Komponente B) in Gewichtsanteilen, bezogen auf den Gesamt-Feststoffgehalt der Dispersion, von 1 - 70 % vorliegt.

3. Verfahren zur Herstellung einer wäßrigen Dispersion nach Anspruch 1, **dadurch gekennzeichnet, daß**
A) eine Polyolkomponente
aus 20 - 60 % einer Polyesterkomponente AI) mit einem Molekulargewicht von 500 - 6000, einer Säurezahl < 15 mg KOH/g und einer OH-Zahl von 50 - 250 mg KOH/g, **dadurch gekennzeichnet, daß** AI) hergestellt wird durch Umsetzung von
AI ₁₎ 10 - 60 % einer oder mehrerer aliphatischer, gesättigter oder ungesättigter Monocarbonsäuren mit 8 - 30 C-Atomen,
AI ₂₎ 0,4 - 5 % einer α,β-ungesättigten Mono- oder Dicarbonsäure mit 3 - 8 C-Atomen bzw. deren Anhydriden,
AI ₃₎ 20 - 60 % einer oder mehrerer aliphatischer, cycloaliphatischer oder aromatischer Di-, Tri- oder Tetracarbonsäuren mit 2 - 20 C-Atomen bzw. deren Anhydriden,
AI ₄₎ 10 - 60 % eines oder mehrerer aliphatischer Alkohole mit 1 - 4 OH-Gruppen pro Molekül,
AI ₅₎ 0 - 10 % einer aromatischen Monocarbonsäure,
AI ₆₎ 0 - 10 % weiteren Säure- oder OH-reaktiven Verbindungen wie z.B. Epoxiden, Isocyanaten oder Oxazolinen mit 1 - 4, bevorzugt 1,9 - 2,5 funktionellen Gruppen pro Molekül
und 40 - 80 % einer Polyacrylatkomponente AII) hergestellt werden durch radikalische Polymerisation einer Mischung aus
AII ₁₎ 20 - 70 % eines oder mehrerer nicht-funktioneller Ester von α,β-ungesättigten Carbonsäuren mit 3 - 12 C-Atomen und aliphatischen oder cycloaliphatischen Monoalkoholen mit 1 - 18 C-Atomen,
AII ₂₎ 1 - 10 %einer oder mehrerer α,β-ungesättigter Carbonsäuren mit 3 - 12 C-Atomen bzw. deren Anhydriden,
AII ₃₎ 0 - 95 % eines oder mehrerer hydroxyfunktioneller, radikalisch polymerisierbarer Monomere,
AII ₄₎ 0 - 20 % weiterer radikalisch polymerisierbarer Monomere in Gegenwart der Polyesterkomponente AI), wobei gilt, daß die unter AI) und AII) gemachten Angaben auf das Gewicht bezogen sind und sich zu 100 % addieren
und anschließend
B) eine Polyisocyanatkomponente
bestehend aus einem blockierten Polyisocyanat sowie Wasser, gegebenenfalls organischen Lösemitteln und gegebenenfalls lackübliche Hilfsstoffe zugegeben werden, wobei gilt, daß die Komponente B) in Gewichtsanteilen, bezogen auf den Gesamt-Feststoffgehalt der Dispersion, von 1 - 70 % vorliegt.

4. Verfahren zur Herstellung einer wäßrigen Dispersion gemäß Anspruch 1, **gekennzeichnet dadurch, daß** die Polyisocyanatkomponente B) ein nichthydrophiliertes Polyisocyanat ist und gemeinsam mit der Polyolkomponente A) dispergiert wird.

5. Verfahren zur Herstellung einer wäßrigen Dispersion gemäß Anspruch 1, **gekennzeichnet dadurch, daß** die Polyolkomponente A) zu 40 - 55 % aus der Polyesterkomponente AI) mit einem Molekulargewicht von 500 - 6000 besteht.

6. Verfahren zur Herstellung einer wäßrigen Dispersion gemäß Anspruch 1, **gekennzeichnet dadurch, daß** die Polyolkomponente A) zu 40 - 55 % aus der Polyesterkomponente AI) mit einem Molekulargewicht von 1000 - 3000 besteht.

7. Verfahren zur Herstellung einer wäßrigen Dispersion gemäß Anspruch 1, **gekennzeichnet dadurch, daß** die Polyesterkomponente AI) zu 30 - 50 % Bausteine aus einer oder mehreren aliphatischen Monocarbonsäuren AI ₁₎ mit 8 - 30 C-Atomen enthält.

8. Verfahren zur Herstellung einer wäßrigen Dispersion gemäß Anspruch 1, **gekennzeichnet dadurch, daß** AI ₁₎ eine Mischung ist, die zu 80 - 100 % aus aliphatischen Monocarbonsäuren mit 12 - 20 C-Atomen und weniger als zwei C=C-Doppelbindungen pro Molekül zusammengesetzt ist.

9. Verfahren zur Herstellung einer wäßrigen Dispersion gemäß Anspruch 1, **gekennzeichnet dadurch, daß** die Polyacrylatkomponente in zwei Teilen polymerisiert wird, wobei der erste Teil eine Säurezahl von weniger als 10 mg KOH/g und der zweite Teil eine Säurezahl von mehr als 20 mg KOH/g aufweist.

10. Verwendung einer wäßrigen Dispersion gemäß Anspruch 1 für elastische Einbrennlacke mit hoher Elastizität.

11. Verwendung einer wäßrigen Dispersion gemäß Anspruch 1 für elastische Füllerschichten in der Autoserienlackierung.

12. Verwendung einer wäßrigen Disperison gemäß Anspruch 1 für elastische Füllerschichten in der Autoserienlackierung in Kombination mit 2 - 15 % eines oder mehreren wasserdispergierbaren Melaminharzes bzw blockierten hydrophilierten Polyisocyanats und/ oder 2 - 30 % eines wasserverdünnbaren Polyester- bzw- Polyester-Polyurethanharzes, wobei die gemachten Angaben sich auf das Gewicht des Feststoffanteiles beziehen.

## Claims

1. Aqueous dispersion comprising
A) a polyol component A) composed of
20-60 wt. % of a polyester component AI), **characterized in that** AI) contains 10-60 wt. % of units derived from one or more aliphatic, saturated or unsaturated monocarboxylic acids having 8-30 carbon atoms, and contains 0.4-5% of units derived from one or more radically polymerizable α,β-unsaturated mono- or di-carboxylic acids having 3-8 carbon atoms, and/or their anhydrides, and
40 - 80% of a polyacrylate component AII),
and
B) a polyisocyanate component
composed of one or more blocked polyisocyanates, component B) being present in weight fractions, based on the total solids content of the dispersion, of 1-70%.

2. Aqueous dispersion according to Claim 1, comprising
A) a polyol component
composed of 20-60% of a polyester component AI) having a molecular weight of 500-6000, an acid number <12 mg of KOH/g and an OH number of 50-250 mg of KOH/g, **characterized in that** AI) is obtainable by reacting
AI₁₎ 10-60% of one or more aliphatic, saturated or unsaturated monocarboxylic acids having 8-30 carbon atoms,
AI₂₎ 0.4-5% of an α,β-unsaturated mono- or di-carboxylic acid having 3-8 carbon atoms, and/or anhydrides thereof,
AI₃₎ 20-60% of one or more aliphatic, cycloaliphatic or aromatic di-, tri- or tetra-carboxylic acids having 2-20 carbon atoms, and/or anhydrides thereof,
AI₄₎ 10-60% of one or more aliphatic alcohols having 1-4 OH groups per molecule,
AI₅₎ 0-10% of an aromatic monocarboxylic acid,
AI₆₎ 0-10% of other acid- or OH-reactive compounds such as, for example, epoxides, isocyanates or oxazolines having 1-4, preferably 1.9 to 2.5, functional groups per molecule,
and also 40-80% of a polyacrylate component AII) obtainable by radical polymerization of a mixture of
AII₁₎ 20-70% of one or more non-functional esters of α,β-unsaturated carboxylic acids having 3-12 carbon atoms and aliphatic or cycloaliphatic monoalcohols having 1-18 carbon atoms,
AII₂₎ 1-10% of one or more α,β-unsaturated carboxylic acids having 3-12 carbon atoms, and/or anhydrides thereof,
AII₃₎ 0-95% of one or more hydroxy-functional, radically polymerizable monomers,
AII₄₎ 0-20% of other radically polymerizable monomers,
in the presence of the polyester component AI), the figures given under AI and AII being on a weight basis and adding up to 100%,
and
B) a polyisocyanate component,
composed of a blocked, preferably non-hydrophilicized polyisocyanate, component B) being present in weight fractions, based on the total solids content of the dispersion, of 1-70%.

3. Process for preparing an aqueous dispersion according to Claim 1, **characterized in that**
A) a polyol component
composed of 20-60% of a polyester component AI) having a molecular weight of 500-6000, an acid number <15 mg of KOH/g and an OH number of 50-250 mg of KOH/g, **characterized in that** AI) is prepared by reacting
AI₁₎ 10-60% of one or more aliphatic, saturated or unsaturated monocarboxylic acids having 8-30 carbon atoms,
AI₂₎ 0.4-5% of an α,β-unsaturated mono- or di-carboxylic acid having 3-8 carbon atoms, and/or anhydrides thereof,
AI₃₎ 20-60% of one or more aliphatic, cycloaliphatic or aromatic di-, tri- or tetra-carboxylic acids having 2-20 carbon atoms, and/or anhydrides thereof,
AI₄₎ 10-60% of one or more aliphatic alcohols having 1-4 OH groups per molecule,
AI₅₎ 0-10% of an aromatic monocarboxylic acid,
AI₆₎ 0-10% of other acid- or OH-reactive compounds such as, for example, epoxides, isocyanates or oxazolines having 1-4, preferably 1.9-2.5, functional groups per molecule,
and also 40-80% of a polyacrylate component AII) obtainable by radical polymerization of a mixture of
AII₁₎ 20-70% of one or more non-functional esters of α,β-unsaturated carboxylic acids having 3-12 carbon atoms and aliphatic or cycloaliphatic monoalcohols having 1-18 carbon atoms,
AII₂₎ 1-10% of one or more α,β-unsaturated carboxylic acids having 3-12 carbon atoms, and/or anhydrides thereof,
AII₃₎ 0-95% of one or more hydroxy-functional, radically polymerizable monomers,
AII₄₎ 0-20% of other radically polymerizable monomers,
in the presence of the polyester component AI), the figures given under AI and AII being on a weight basis and adding up to 100%,
and subsequently
B) a polyisocyanate component,
composed of a blocked polyisocyanate and also water, optionally organic solvents and optionally customary coatings auxiliaries, component B) being present in weight fractions, based on the total solids content of the dispersion, of 1-70%.

4. Process for preparing an aqueous dispersion according to Claim 1, **characterized in that** the polyisocyanate component B) is a non-hydrophilicized polyisocyanate and is dispersed together with the polyol component A).

5. Process for preparing an aqueous dispersion according to Claim 1, **characterized in that** 40-55% of the polyol component A) is composed of the polyester component AI) having a molecular weight of 500-6000.

6. Process for preparing an aqueous dispersion according to Claim 1, **characterized in that** 40-55% of the polyol component A) is composed of the polyester component AI) having a molecular weight of 1000-3000.

7. Process for preparing an aqueous dispersion according to Claim 1, **characterized in that** the polyester component AI) contains 30-50% of units of one or more aliphatic monocarboxylic acids AI₁₎ having 8-30 carbon atoms.

8. Process for preparing an aqueous dispersion according to Claim 1, **characterized in that** AI₁₎ is a mixture composed of 80-100% of aliphatic monocarboxylic acids having 12-20 carbon atoms and less than two C=C double bonds per molecule.

9. Process for preparing an aqueous dispersion according to Claim 1, **characterized in that** the polyacrylate component is polymerized in two parts, the first part having an acid number of less than 10 mg of KOH/g and the second part having an acid number of more than 20 mg of KOH/g.

10. Use of an aqueous dispersion according to Claim 1 for elastic stoving lacquers having high elasticity.

11. Use of an aqueous dispersion according to Claim 1 for elastic surfacer coats in automotive OEM finishing.

12. Use of an aqueous dispersion according to Claim 1 for elastic surfacer coats in automotive OEM finishing in combination with 2-15% of one or more water-dispersible melamine resins and/or blocked hydrophilicized polyisocyanates and/or 2-30% of a water-dilutable polyester or polyester-polyurethane resin, the figures given being based on the weight of the solids fraction.

## Revendications

1. Dispersion aqueuse constituée
A) d'un composant polyol A), constitué de
20 à 60 % en poids d'un composant polyester AI), **caractérisé en ce que** AI) contient 10 à 60 % en poids d'unités, qui dérivent d'un ou de plusieurs acides monocarboxyliques aliphatiques, saturés ou insaturés, comportant 8 à 30 atomes de C, ainsi que 0,4 à 5 % d'unités, qui dérivent d'un ou de plusieurs acides mono- ou dicarboxyliques, α,β-insaturés, à polymérisation radicalaire, comportant 3 à 8 atomes de C ou de leurs anhydrides et
de 40 à 80 % d'un composant polyacrylate AII)
et
B) d'un composant polyisocyanate,
constitué d'un ou de plusieurs polyisocyanates bloqués, le composant B) étant présent en parties en poids, à raison de 1 à 70 %, par rapport à la teneur totale en matières solides de la dispersion.

2. Dispersion aqueuse selon la revendication 1 constituée
A) d'un composant polyol,
constitué de 20 à 60 % d'un composant polyester AI) possédant un poids moléculaire de 500 à 6.000, un indice d'acidité < 12 mg de KOH/g et un indice d'hydroxyle de 50 à 250 mg de KOH/g, **caractérisée en ce que** AI) peut être obtenu en faisant réagir
AI ₁₎ 10 à 60 % d'un ou de plusieurs acides monocarboxyliques aliphatiques, saturés ou insaturés, comportant 8 à 30 atomes de C,
AI ₂₎ 0,4 à 5 % d'un acide mono- ou dicarboxylique α,β-insaturé, comportant 3 à 8 atomes de C ou de leurs anhydrides.
AI ₃₎ 20 à 60 % d'un ou de plusieurs acides di-, tri- ou tétracarboxyliques aliphatiques, cycloaliphatiques ou aromatiques, comportant 2 à 20 atomes de C ou de leurs anhydrides,
AI ₄₎ 10 à 60 % d'un ou de plusieurs alcools aliphatiques possédant 1 à 4 groupes OH par molécule,
AI ₅₎ 0 à 10 % d'un acide monocarboxylique aromatique,
AI ₆₎ 0 à 10 % d'autres composés réagissant aux acides ou aux groupements hydroxyle, tels que des époxydes, des isocyanates ou des oxazolines comportant 1 à 4, de préférence 1,9 à 2,5 groupes fonctionnels par molécule,
ainsi que 40 à 80 % d'un composant polyacrylate AII), pouvant être obtenu par polymérisation radicalaire d'un mélange constitué de
AII ᵢ₎ 20 à 70 % d'un ou de plusieurs esters non fonctionnels d'acides carboxyliques α,β-insaturés comportant 3 à 12 atomes de C et de monoalcools aliphatiques ou cycloaliphatiques comportant 1 à 18 atomes de C,
AII ₂₎ 1 à 10 % d'un ou de plusieurs acides carboxyliques α,β-insaturés comportant 3 à 12 atomes de C ou de leurs anhydrides,
AII ₃₎ 0 à 95 % d'un ou de plusieurs monomères hydroxyfonctionnels, polymérisables par voie radicalaire,
AII ₄₎ 0 à 20 % d'autres monomères polymérisables par voie radicalaire,
en présence du composant polyester AI), les indications données sous AI et AII se rapportant au poids et s'additionnant pour faire 100 %,
et
B) d'un composant polyisocyanate,
constitué d'un polyisocyanate bloqué, de préférence un polyisocyanate non rendu hydrophile, le composant B) étant présent en parties en poids à raison de 1 à 70 %, par rapport à la teneur totale en matières solides de la dispersion.

3. Procédé de production d'une dispersion aqueuse selon la revendication 1, **caractérisé en ce que**
A) un composant polyol
constitué de 20 à 60 % d'un composant polyester AI) possédant un poids moléculaire de 500 à 6.000, un indice d'acidité < 15 mg de KOH/g et un indice d'hydroxyle de 50 à 250 mg de KOH/g, **caractérisé en ce que** AI) est obtenu en faisant réagir
AI ₁₎ 10 à 60 % d'un ou de plusieurs acides monocarboxyliques aliphatiques, saturés ou insaturés, comportant 8 à 30 atomes de C,
AI ₂₎ 0,4 à 5 % d'un acide mono- ou dicarboxylique α,β-insaturé, comportant 3 à 8 atomes de C ou de leurs anhydrides.
AI ₃₎ 20 à 60 % d'un ou de plusieurs acides di-, tri- ou tétracarboxyliques aliphatiques, cycloaliphatiques ou aromatiques, comportant 2 à 20 atomes de C ou de leurs anhydrides,
AI ₄₎ 10 à 60 % d'un ou de plusieurs alcools aliphatiques possédant 1 à 4 groupes OH par molécule,
AI ₅₎ 0 à 10 % d'un acide monocarboxylique aromatique,
AI ₆₎ 0 à 10 % d'autres composés réagissant aux acides ou aux groupements hydroxyle, tels que des époxydes, des isocyanates ou des oxazolines comportant 1 à 4, de préférence 1,9 à 2,5 groupes fonctionnels par molécule,
et 40 à 80 % d'un composant polyacrylate AII) sont produits par polymérisation radicalaire d'un mélange constitué de
AII ᵢ₎ 20 à 70 % d'un ou de plusieurs esters non fonctionnels d'acides carboxyliques α,β-insaturés, comportant 3 à 12 atomes de C et de monoalcools aliphatiques ou cycloaliphatiques comportant 1 à 18 atomes de C,
AII ₂₎ 1 à 10 % d'un ou de plusieurs acides carboxyliques α,β-insaturés, comportant 3 à 12 atomes de C ou de leurs anhydrides,
AII ₃₎ 0 à 95 % d'un ou de plusieurs monomères hydroxyfonctionnels, polymérisables par voie radicalaire,
AII ₄₎ 0 à 20 % d'autres monomères polymérisables par voie radicalaire,
en présence du composant polyester AI), les indications données sous AI) et AII) se rapportant au poids et s'additionnant pour faire 100 %,
et ensuite
B) un composant polyisocyanate,
constitué d'un polyisocyanate bloqué, ainsi que de l'eau, le cas échéant des solvants organiques et éventuellement des adjuvants usuels des vernis et peintures sont ajoutés, le composant B) étant présent en parties en poids à raison de 1 à 70 % par rapport à la teneur totale en matières solides de la dispersion.

4. Procédé de production d'une dispersion aqueuse selon la revendication 1, **caractérisé en ce que** le composant polyisocyanate B) est un polyisocyanate non rendu hydrophile et qu'il est dispersé conjointement avec le composant polyol A).

5. Procédé de production d'une dispersion aqueuse selon la revendication 1, **caractérisé en ce que** le composant polyol A) est constitué à raison de 40 à 55 % du composant polyester AI) possédant un poids moléculaire de 500 à 6000.

6. Procédé de production d'une dispersion aqueuse selon la revendication 1, **caractérisé en ce que** le composant polyol A) est constitué à raison de 40 à 55 % du composant polyester AI) possédant un poids moléculaire de 1000 à 3000.

7. Procédé de production d'une dispersion aqueuse selon la revendication 1, **caractérisé en ce que** le composant polyester AI) contient 30 à 50 % d'éléments constitutifs d'un ou de plusieurs acides monocarboxyliques aliphatiques AI ₁₎ comportant 8 à 30 atomes de C.

8. Procédé de production d'une dispersion aqueuse selon la revendication 1, **caractérisé en ce que** AI ₁₎ est un mélange qui est composé à raison de 80 à 100 % d'acides monocarboxyliques aliphatiques comportant 12 à 20 atomes de C et moins de deux doubles liaisons C=C par molécule.

9. Procédé de production d'une dispersion aqueuse selon la revendication 1, **caractérisé en ce que** le composant polyacrylate est polymérisé en deux parties, la première partie présentant un indice d'acidité inférieur à 10 mg de KOH/g et la deuxième partie possédant un indice d'acidité supérieur à 20 mg de KOH/g.

10. Utilisation d'une dispersion aqueuse selon la revendication 1 pour des vernis ou laques à cuire élastiques à élasticité élevée.

11. Utilisation d'une dispersion aqueuse selon la revendication 1 pour des couches de matière de charge élastiques dans la peinture d'automobiles en série.

12. Utilisation d'une dispersion aqueuse selon la revendication 1 pour des couches de matière de charge élastiques dans la peinture d'automobiles en série, en association avec 2 à 15 % d'une ou de plusieurs résines de mélamine dispersibles dans l'eau ou de polyisocyanates rendus hydrophiles bloqués et/ou 2 à 30 % d'une résine polyester ou d'une résine polyester-polyuréthane diluable à l'eau, les indications données se rapportant au poids de la fraction de matière solide.
